# EUROPÄISCHE PATENTSCHRIFT

(11) **EP 2 526 271 B1**
(45) Veröffentlichungstag und Bekanntmachung des Hinweises auf die Patenterteilung: **01.07.2015**
(21) Anmeldenummer: 10787408.3
(22) Anmeldetag: 02.12.2010
(51) Int. Cl.: F01N 3/20

(54) **KRAFTFAHRZEUG MIT EINEM SPEICHER-BEHÄLTER FÜR REDUKTIONSMITTEL**
MOTOR VEHICLE WITH A STORAGE CONTAINER FOR REDUCING AGENT
VÉHICULE AUTOMOBILE ÉQUIPÉ D'UN RÉSERVOIR ACCUMULATEUR POUR AGENT RÉDUCTEUR

(30) Priorität: 22.01.2010 DE 102010005406
(43) Veröffentlichungstag der Anmeldung: 28.11.2012
(73) Patentinhaber: Bayerische Motoren Werke Aktiengesellschaft, 80809 München (DE)
(72) Erfinder: HENNECKE, Joerg, 85540 Haar (DE); BRUHN, Andreas, 82178 Puchheim (DE)
(86) Internationale Anmeldenummer: PCT/EP2010/068701
(87) Internationale Veröffentlichungsnummer: WO 2011/088926

(56) Entgegenhaltungen:
- DE-A1- 10 319 841
- DE-A1- 19 854 997

## Beschreibung

Die Erfindung betrifft ein Kraftfahrzeug mit einem Behälter zur Speicherung von der Abgasanlage einer im Kraftfahrzeug vorgesehenen Brennkraftmaschine zuführbarem flüssigen Reduktionsmittel, nach dem Oberbegriff des Anspruchs 1. Zum Stand der Technik wird neben der DE 10 2007 026 944 A1 auf die DE 198 54 997 A1 verwiesen.

Dem Fachmann grundsätzlich bekannt ist die Einspritzung einer flüssigen Harnstofflösung in die Abgasanlage einer Brennkraftmaschine stromauf eines sog. Reduktionskatalysators, um in diesem schädliche Bestandteile des Brennkraftmaschinen-Abgasstromes erfolgreich konvertieren zu können. Für eine in Kraftfahrzeugen befindliche Brennkraftmaschine muss diese ein flüssiges Reduktionsmittel darstellende Harnstofflösung an Bord des Fahrzeugs mitgeführt werden, wobei bekanntlich ein zu lösendes Problem darin besteht, dass dieses flüssige Reduktionsmittel bei entsprechend niedrigen Umgebungstemperaturen einfrieren und dann nicht mehr der Abgasanlage zugeführt werden kann.

Ein weiteres Problem ist, auf welche Weise dieses flüssige Reduktionsmittel in die Abgasanlage solchermaßen eingeleitet wird, dass dieses im Abgasstrom der Brennkraftmaschine bestmöglich verteilt wird. Hierfür wurde bereits die Einblasung zusammen mit einem Druckluftstrom vorgeschlagen, wobei es bspw. aus der eingangs genannten DE 10 2007 026 944 A1 weiterhin bekannt ist, die für die Darstellung dieses Druckluftstromes vorgesehene Druckluft auch zur Förderung des flüssigen Reduktionsmittels zu einer in der Abgasanlage vorgesehenen Einspritzdüse heranzuziehen. Hierfür ist mit einer Luft-Fördervorrichtung für diese Druckluft im Luftpolster, welches sich im Behälter oberhalb des Reduktionsmittel-Spiegels befindet, durch Zufuhr von weiterer Luft ein Überdruck aufbaubar. Unter Einfluss dieses Überdrucks wird dann Reduktionsmittel aus dem Behälter zur genannten Einspritzdüse transportiert.

Die eingangs weiterhin genannte DE 198 54 997 A1 zeigt einen Kraftstofftank eines Kraftfahrzeugs, aus welchem mittels einer Pumpe Gase in einen Druckbehälter abführbar sind, wobei im Kraftstofftank ein Unterdruck entsteht.

Auf die Speicherung von flüssigem Reduktionsmittel zurückkommend ist es weiterhin bekannt, dass in einem Kraftfahrzeug aus verschiedenen Gründen zwei oder mehrere Behälter vorgesehen sein können. Beispielsweise kann es alleine wegen nicht ausreichendem Bauraum im Kraftfahrzeug erforderlich sein, ein aus gewissen Gründen gefordertes Behälter-Volumen auf zwei voneinander getrennte Behälter zu verteilen. So kann es also nötig sein, neben einem ersten Behälter, aus dem das Reduktionsmittel in die Abgasanlage geführt wird, einen weiteren sog. Vorratsbehälter vorzusehen, aus welchem entweder kontinuierlich oder in Abhängigkeit von zumindest einem geeignet ermittelten Füllstand (im ersten Behälter) flüssiges Reduktionsmittel in den besagten ersten Behälter überführt wird.

Im Abhängigkeit von der Anordnung der beiden oder mehreren Behälter relativ zueinander und in Abhängigkeit vom Verlauf einer sog. Zufuhrleitung, durch die dem (ersten) Behälter, aus welchem die Abfuhr von Reduktionsmittel in die Abgasanlage erfolgt, weiteres Reduktionsmittel aus einem weiteren Vorratsbehälter zugeführt wird, kann es erforderlich sein, den Transport von weiterem Reduktionsmittel durch die Zufuhrleitung unter Einsatz von Energie gezielt zu veranlassen bzw. zumindest einen solchen Transport anzustoßen. Es ist bereits bekannt, hierfür eine eigenständige Pumpe als Fördervorrichtung für das flüssige Reduktionsmittel vorzusehen.

Eine solche eigenständige Pumpe stellt jedoch einen Aufwand dar, den zu vermeiden sich die vorliegende Erfindung zur Aufgabe gestellt hat.
Die Lösung dieser Aufgabe ist für ein Kraftfahrzeug nach dem Oberbegriff des Anspruchs 1 dadurch gekennzeichnet, dass dem Behälter über eine Zufuhrleitung aus einem weiteren im Fahrzeug vorgesehenen Vorratsbehälter für Reduktionsmittel mittels eines mit der Luft-Fördervorrichtung im Luftpolster erzeugten Unterdrucks Reduktionsmittel aus dem Vorratsbehälter (9) zuführbar ist. Vorteilhafte Weiterbildungen sind Inhalt der Unteransprüche.

Erfindungsgemäß wird nur eine einzige mit dem Luftpolster im Behälter oberhalb des Reduktionsmittel-Spiegels verbundene Fördervorrichtung für Luft benötigt. Mit dieser einzigen Luft-Fördervorrichtung kann sowohl flüssiges Reduktionsmittel aus dem Behälter abgeführt werden, nämlich indem im besagten Luftpolster ein Überdruck gegenüber einem Bereich, in welchen das Reduktionsmittel überführt werden soll, erzeugt wird, als auch dem besagten Behälter zugeführt werden, nämlich indem im besagten Luftpolster ein Unterdruck gegenüber einem Bereich; aus welchem weiteres Reduktionsmittel dem Behälter zugeführt werden soll, erzeugt wird. Durch einen solchen Unterdruck wird weiteres Reduktionsmittel quasi in den Behälter eingesaugt, beispielsweise bzw. vorzugsweise aus einem bereits genannten Vorratsbehälter. In Abhängigkeit von der konkreten Ausführungsform der besagten Luft-Fördervorrichtung kann zur Erzeugung von Überdruck oder Unterdruck im genannten Luftpolster beispielsweise einfach die Drehrichtung der Luft-Fördervorrichtung umgekehrt werden, so beispielsweise dann, wenn es sich bei der Luft-Fördervorrichtung um eine einfache Flügelzellenpumpe handelt. Alternativ ist die Erzeugung von Überdruck oder Unterdruck im Luftpolster im besagten Behälter oberhalb des Reduktionsmittel-Spiegels aber auch durch geeignetes Schalten von Ventilen, die in geeignet mit diesem Luftpolster bzw. der Umgebung sowie der Luft-Fördervorrichtung verbundenen Leitungen vorgesehen sind, möglich.

Es sei ausdrücklich darauf hingewiesen, dass mittels Unterdruck im Behälter bzw. in dessen oberhalb des Reduktionsmittel-Spiegels befindlichen Luftpolster nicht nur Reduktionsmittel aus einem im Fahrzeug vorgesehenen Vorratsbehälter in den Behälter abgesaugt werden kann, sondern dass vorzugsweise nach Außerbetrieb-Setzen des Fahrzeugs auch Reduktionsmittel aus einer vom Behälter zur Einspritzdüse oder dgl. in der Abgasleitung führenden Leitung in den Behälter zurück gefördert werden kann, insbesondere um ein Einfrieren des Reduktionsmittels in dieser Leitung zu vermeiden. Auch kann ein solcher Unterdruck grundsätzlich beim Befüllen des Behälters mit Reduktionsmittel hilfreich sein, also auch dann, wenn neben diesem Behälter kein weiterer Vorratsbehälter vorgesehen ist.

Wenn zusätzlich zum genannten ersten Behälter ein (weiterer) Vorratsbehälter für flüssiges Reduktionsmittel vorgesehen ist, so kann letzterer im wesentlichen auf der gleichen geodätischen Höhe wie der erste Behälter oder sogar unterhalb diesem liegen, was grundsätzlich eine Energiezufuhr zum Überführen von flüssigem Reduktionsmittel aus dem Vorratsbehälter in den ersten Behälter erforderlich macht. Befindet sich hingegen der Vorratsbehälter geodätisch oberhalb des ersten Behälters, so kann ein Fluid grundsätzlich alleine unter Schwerkrafteinfluss über eine sog. Zufuhrleitung aus dem Vorratsbehälter in den ersten Behälter gelangen. Beispielsweise wegen der Gefahr des Einfrierens dieser Zufuhrleitung kann es jedoch erwünscht sein, dass nur nach Anforderung Fluid aus dem Vorratsbehälter in die Zufuhrleitung gelangt. Hierfür kann nun das grundsätzlich bekannte Prinzip des Hebers oder Saughebers genutzt werden, nach welchem über eine zunächst geodätisch ansteigende Zufuhrleitung Fluid aus einem Vorratsbehälter in einen geodätisch tiefer liegenden Behälter gefördert werden kann. Nach einer vorteilhaften Weiterbildung der vorliegenden Erfindung wird also zunächst durch Erzeugung von Unterdruck im Luftposter des tiefer liegenden Behälters aus dem Vorratsbehälter unter Nutzung des Heber-Prinzips und des hydrostatischen Drucks sowie der in der in der Zufuhrleitung befindlichen Fluidsäule herrschenden Kohäsionskräfte flüssiges Reduktionsmittel über die aus dem Vorratsbehälter zunächst geodätisch ansteigende Zufuhrleitung angesaugt, welches danach selbsttätig solange vom Vorratsbehälter in den Behälter überströmt, bis im Luftpolster des Behälters ein ausreichend hoher die besagte Fluidsäule in der Zufuhrleitung in den Vorratsbehälter zurückdrängender Überdruck erzeugt wird.

Weiter wurde erkannt, dass in Verbindung mit der Entnahme von Reduktionsmittel aus dem Behälter ein Überdruck in diesem unter gewissen Randbedingungen zwar äußerst hilfreich sein kann, jedoch nicht andauernd erforderlich ist. Dies gilt insbesondere dann, wenn die Einspritzdüse, über welche das Reduktionsmittel in die Abgasanlage eingeführt ist, mit einer eigenen Pumpe versehen ist. Als Einspritzdüse eine Pumpe-Düse-Einheit vorzusehen, die aus dem Behälter die benötigte Menge von Reduktionsmittel ansaugt, ist grundsätzlich bekannt. Jedoch kann es bei höheren Temperaturen des Reduktionsmittels und/oder bei relativ niedrigem Luftdruck in der Umgebung zu einer, Dampfblasenbildung in der Saugleitung dieser Pumpe-Düse-Einheit kommen. Als Abhilfemaßnahme hierfür soll nun im Luftpolster im besagten Behälter oberhalb des Reduktionsmittel-Spiegels ein Überdruck aufgebaut werden, wobei die hierfür vorgesehene Luft-Fördervorrichtung (für Luft aus der Umgebung) im Sinne einer vorteilhaften Weiterbildung jedoch nur dann betrieben wird, wenn dies tatsächlich erforderlich ist, d.h. falls die Gefahr der Dampfblasenbildung besteht. Demnach ist also für die Zufuhr des Reduktionsmittels in die Abgasanlage eine eigenständige Fördereinheit vorgesehen, die Reduktionsmittel aus dem Behälter absaugt, wobei mittels der mit dem Luftpolster im Behälter in Verbindung stehenden Luft-Fördervorrichtung durch geeignete Ansteuerung derselben in Abhängigkeit von zumindest einer geeigneten Randbedingung nur soweit Überdruck im Luftpolster oberhalb des Reduktionsmittel-Spiegels im Behälter erzeugt wird, dass keine Dampfblasenbildung in der Saugleitung der genannten Fördereinheit auftreten kann. Als solche Randbedingungen können eine relevante Temperatur, vorzugsweise die im Behälter herrschende Temperatur, und/oder ein relevanter Druck, vorzugsweise der Umgebüngs-Luftdruck berücksichtigt werden.

Weiter wurde erkannt, dass aus der Förderleistung der Luft-Fördervorrichtung zur Erzeugung eines bestimmten Überdrucks im Behälter bzw. im Luftpolster desselben, welcher mittels eines Sensors ermittelt werden kann, auf den Füllstand von Reduktionsmittel im Behälter geschlossen werden kann. Diese Technik ist aus der Dichtheitsprüfung von Kräftfahrzeug-Tanksystemen bereits grundsätzlich bekannt und kann nun auch hier zumindest zur Plausibilisierung der Signale eines weiteren im Behälter vorgesehenen Höhenstandsensors für den Reduktionsmittel-Spiegel verwendet werden. Schließlich kann im Hinblick auf einen einfachen Aufbau die Luft-Fördervorrichtung über eine Entlüftungsleitung des Behälters mit dem in diesem vorhandenen Luftpolster verbunden sein, wobei eine Entlüftung des Behälters durch die stillgesetzte Luft-Fördervorrichtung hindurch erfolgt.

Im weiteren wird ein Ausführungsbeispiel der vorliegenden Erfindung anhand der beigefügten Prinzipskizze beschrieben.

In dieser Prinzipskizze ist mit der Bezugsziffer 1 ein in einem nicht dargestellten Kraftfahrzeug angeordneter geschlossener Behälter gekennzeichnet, der mit einem flüssigen Reduktionsmittel 2 vorzugsweise in Form einer Harnstofflösung befüllt ist, und zwar in der Höhe bis zu einem FlüssigkeitsSpiegel oder Reduktionsmittel-Spiegel 3. Oberhalb dieses Spiegels 3 befindet sich im Behälter 1 ein Luftpolster 4. Über eine Saugleitung 5 kann eine Pumpe-Düse-Einheit 6 flüssiges Reduktionsmittel 2 aus dem Behälter 1 absaugen und in eine nur bruchstückhaft dargestellte Abgasanlage 7 einer nicht dargestellten und als Antriebsaggregat des Kraftfahrzeugs fungierenden Brennkraftmaschine einspritzen. Zur Unterstützung der Absaugung von Reduktionsmittels 2 aus dem Behälter 1 durch die Pumpe-Düse-Einheit 6 kann im Luftpolster 4 oberhalb des Flüssigkeits-Spiegels 3 im Behälter 1 mittels einer Luft-Fördervorrichtung 11 ein Überdruck aufgebaut werden. Hierbei fördert diese Luft-Fördervorrichtung 11 Luft aus der Umgebung über eine Luftleitung 12 in den Behälter 1 bzw. in dessen Luftpolster 4.

Wenn aus dem Behälter 1 das darin gespeicherte Reduktionsmittel nahezu vollständig entnommen wurde, so kann dieser Behälter 1 vorzugsweise im Rahmen eines Werkstatt-Aufenthalts des Kraftfahrzeugs über eine in diesem Behälter 1 mündende Befüll-Leitung 8 mit neuem Reduktionsmittel 2 befüllt werden. Um die Wartungsintervalle zwischen solchen Werkstatt-Aufentahlten möglichst groß zu halten, ist neben dem Behälter 1 noch ein weiterer Vorratsbehälter 9 für flüssiges Reduktionsmittel 2 vorgesehen, der ebenfalls (während dieses Werkstatt-Aufenthalts des Kraftfahrzeugs) über die Befüll-Leitung 8 befüllt werden kann. Befindet sich somit zu einem Zeitpunkt, nachdem aus dem Behälter 1 eine größere Menge von Reduktionsmittel 2 entnommen und der Abgasanlage 7 zugeführt worden ist, im Behälter 1 nur noch eine geringe Menge von Reduktionsmittel 2, was mittels eines nicht dargestellten Füllstaridsensors von einer (ebenfalls nicht dargestellten) elektronischen Steuereinheit erkannt werden kann, so kann zunächst im Vorratsbehälter 9 gespeichertes Reduktionsmittel 2 in den Behälter 1 überführt werden, ohne dass eine Befüllung über die Befüll-Leitung 8 erfolgen muss. Hierfür ist der Behälter 1 über eine Zufuhrleitung 10, die im Luftpolster 4 des Behälters 1 mündet, mit dem Innenraum des Vorratsbehälters 9 verbunden, und zwar vorzugsweise mit der geodätisch tiefsten Stelle desselben.

Mit der in der Prinzipskizze gezeigten Anordnung, bei der sich der Behälter 1 und der Vorratsbehälter 9 (zufälligerweise) im wesentlichen auf der gleichen geodätischen Höhe befinden, muss mit dem figürlich dargestellten Verlauf der Zufuhrleitung 10 Arbeit verrichtet werden, um Reduktionsmittel 2 vom Vorratsbehälter 9 in den Behälter 1 zu überführen. Als treibende Kraft für diese Überführung wird im Luftpolster 4 des geschlossenen Behälters 1 mittels einer Luft-Fördervorrichtung 11 in Form einer Flügelzellenpumpe ein Unterdruck erzeugt, indem diese Flügelzellenpumpe bzw. Luft-Fördervorrichtung 11 über eine Luftleitung 12 Luft aus dem Luftpolster 4 absaugt und in die freie Umgebung fördert. Selbstverständlich ist ein solcher Aufbau von Unterdruck im Behälter 1 bzw. im Luftpolster 4 desselben nur dann möglich, wenn dieser Behälter 1 gegenüber der Umgebung abgeschlossen ist, weshalb im Mündungsbereich der Befüll-Leitung 8 in diesen Behälter 1 eine sog. Befüllklappe 15 vorgesehen ist, die die Mündungsöffnung der Befüll-Leitung 8 in den Behälter 1 dicht verschließt, wenn keine Befüllung über diese Befüll-Leitung 8 erfolgt. Sicherheitshalber ist eine analoge Befüllklappe 15 im Mündungsbereich der Befüll-Leitung 8 im Vorratsbehälter 9 vorgesehen.

Zurückkommend auf die von der Luft-Fördervorrichtung 9 in das Luftpolster 4 des Behälters 1 führende Luftleitung 12 ist an diese ein Drucksensor 13 abgeschlossen, mit welchem folglich der im Luftpolster 4 herrschende Druck ermittelt und an die bereits genannte elektronische Steuereinheit übermittelt werden kann. Ferner zweigt aus Sicherheitsgründen von dieser Luftleitung 12 eine zu einem Überdruckventil 14 führende Leitung ab, wobei dieses Überdruckventil 14 bei Überschreiten eines bestimmten Druck-Grenzwertes in die Umgebung öffnet.

Dass mit der Luft-Fördervorrichtung 11 im Luftpolster 4 ein Unterdruck gegenüber dem im Vorratsbehälter 9 herrschenden Druck erzeugt werden kann, um Reduktionsmittel 2 aus dem Vorratsbehälter 9 in den Behälter 1 abzusaugen, ist jedoch nur ein Aspekt. Daneben kann nämlich - wie bereits kurz erläutert wurde - mit dieser Luft-Fördervorrichtung 11 auch ein Überdruck im Luftpolster 4 erzeugt werden, indem diesem durch die Luft-Fördervorrichtung 11 Luft aus der Umgebung zugeführt wird. Damit steht das im Behälter 1 befindliche Reduktionsmittel 2 unter erhöhtem Druck, so dass in der Saugleitung 5 auch unter widrigen Umständen keine Dampfblasenbildung im darin befindlichen Reduktionsmittel 2 erfolgen kann, so dass die Pumpe-Düse-Einheit 6 stets mit Sicherheit die geforderte Menge von Reduktionsmittel 2 erhält. Dabei sei ausdrücklich darauf hingewiesen, dass diese letztgenannte Funktion der Luft-Fördervorrichtung 11 praktisch unabhangig von deren zuerst beschriebener Funktion, nämlich der Erzeugung von Unterdruck im Luftpolster 4 ist, wenngleich eine Kombination dieser beiden Funktionen im Sinne einer Funktionsvereinigung selbstverständlich besonders vorteilhaft ist. Selbstverständlich sind auch eine Vielzahl weiterer Abwandlungen von diesem beschriebenen Ausführungsbeispiel möglich, ohne den Inhalt der Patentansprüche zu verlassen, wobei insbesondere auf die Erläuterungen vor dieser Figuren-Beschreibung verwiesen wird.

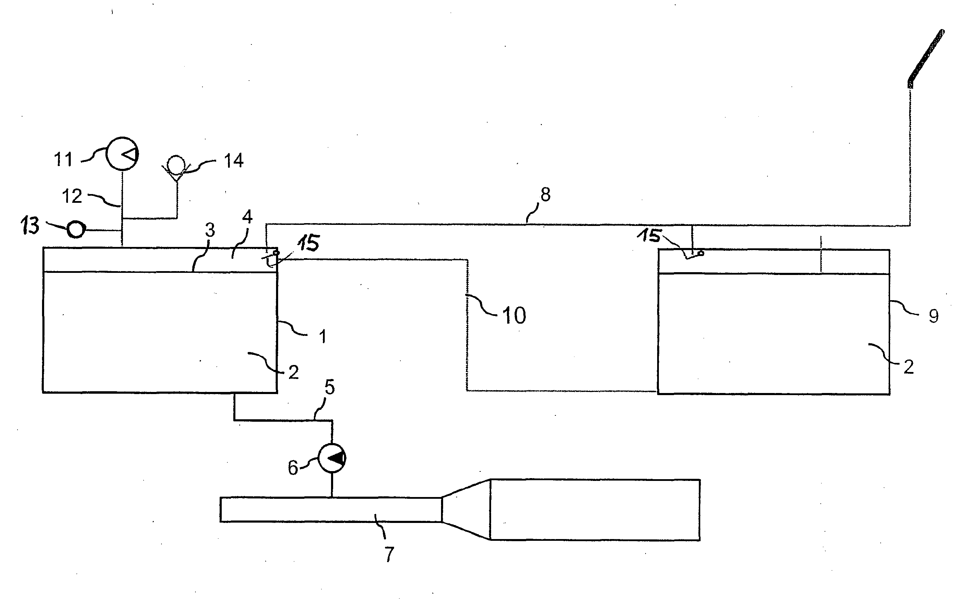

## Patentansprüche

1. Kraftfahrzeug mit einem Behälter (1) zur Speicherung von der Abgasanlage (7) einer im Kraftfahrzeug vorgesehenen Brennkraftmaschine zuführbarem flüssigen Reduktionsmittel (2), sowie mit einer Luft-Fördervorrichtung (11), mittels derer im Luftpolster (4), welches sich im Behälter (1) oberhalb des Reduktionsmittel-Spiegels (3) befindet, durch Zufuhr von weiterer Luft aus der Umgebung ein Überdruck aufbaubar und alternativ ein Unterdruck erzeugbar ist, **dadurch gekennzeichnet, dass** dem Behälter (1) über eine Zufuhrleitung (10) aus einem weiteren im Fahrzeug vorgesehenen Vorratsbehälter (9) für Reduktionsmittel (2) mittels eines mit der Luft-Fördervorrichtung (11) im Luftpolster (4) erzeugten Unterdrucks Reduktionsmittel (2) aus dem Vorratsbehälter (9) zuführbar ist.

2. Kraftfahrzeug nach Anspruch 1,
**dadurch gekennzeichnet, dass** mittels Unterdruck im besagten Luftpolster (4) Reduktionsmittel (2) aus einer dieses zur Abgasanlage (7) führenden Leitung (5) in den Behälter (1) zurückführbar ist.

3. Kraftfahrzeug nach Anspruch 2,
**dadurch gekennzeichnet, dass** dem Behälter (1) aus einem geodätisch höher liegenden Vorratsbehälter (9) eine bestimmte Menge von Reduktionsmittel (2) zuführbar ist, indem zunächst durch Erzeugung von Unterdruck im Luftposter (4) des Behälters (1) aus dem Vorratsbehälter (9) unter Nutzung des Heber-Prinzips und des hydrostatischen Drucks sowie der Kohäsionskräfte, welche in der Fluidsäule in der Zufuhrleitung (10) herrschen, flüssiges Reduktionsmittel (2) über die aus dem Vorratsbehälter (9) zunächst geodätisch ansteigende Zufuhrleitung (10) angesaugt wird, welches danach selbsttätig solange vom Vorratsbehälter (9) in den Behälter (1) überströmt, bis im Luftpolster (4) des Behälters (1) ein ausreichend hoher die besagte Fluidsäule in der Zufuhrleitung (10) in den Vorratsbehälter (9) zurückdrängender Überdruck erzeugt wird.

4. Kraftfahrzeug nach einem der vorangegangenen Ansprüche,
**dadurch gekennzeichnet, dass** für die Zufuhr des Reduktionsmittels (2) in die Abgasanlage (7) eine eigenständige Fördereinheit (6) vorgesehen ist, die Reduktionsmittel (2) aus dem Behälter (1) absaugt, und dass mittels der Luft-Fördervorrichtung (11) durch geeignete Ansteuerung derselben in Abhängigkeit von zumindest einer geeigneten Randbedingung nur soweit Überdruck im Luftpolster (4) des Behälters (1) erzeugbar ist, dass keine Dampfblasenbildung in der Saugleitung (5) der Fördereinheit (6) auftreten kann.

5. Kraftfahrzeug nach Anspruch 4,
**dadurch gekennzeichnet, dass** bei der geeigneten Ansteuerung der Luft-Fördervorrichtung (11) eine relevante Temperatur, vorzugsweise die im Behälter (1) herrschende Temperatur und/oder ein relevanter Druck, vorzugsweise der Umgebungs-Luftdruck berücksichtigt wird.

6. Kraftfahrzeug nach einem der vorangegangenen Ansprüche,
**dadurch gekennzeichnet, dass** die Luft-Fördervorrichtung (11) über eine Entlüftungsleitung (12) des Behälters (1) mit dem in diesem vorhandenen Luftpolster (4) verbunden ist, wobei eine Entlüftung des Behälters (1) durch die stillgesetzte Luft-Fördervorrichtung (11) hindurch erfolgt.

7. Kraftfahrzeug nach einem der vorangegangenen Ansprüche,
**dadurch gekennzeichnet, dass** aus der Förderleistung der Luft-Fördervorrichtung (11) zur Erzeugung eines bestimmten Überdrucks im Behälter (1) auf den Füllstand von Reduktionsmittel (2) im Behälter (1) geschlossen wird.

## Claims

1. A motor vehicle with a container (1) for storing liquid reducing agent (2), which can be fed from the exhaust gas system (7) to an internal combustion engine provided in the motor vehicle, and with an air conveying device (11), by means of which, in the air cushion (4), which is located in the container (1) above the reducing agent level (3), an excess pressure can be built up by the supply of further air from the environment and alternatively a negative pressure can be produced, **characterised in that** reducing agent (2) from the storage container (9) can be fed to the container (1) via a feed line (10) from a further storage container (9) provided in the vehicle for reducing agent (2) by means of a negative pressure produced in the air cushion (4) with the air conveying device (11).

2. A motor vehicle according to claim 1, **characterised in that** by means of negative pressure in said air cushion (4), reducing agent (2) can be returned to the container (1) from a line (5) guiding it to the exhaust gas system (7).

3. A motor vehicle according to claim 2, **characterised in that** a certain quantity of reducing agent (2) can be fed to the container (1) from a storage container (9) located geodetically higher, **in that** firstly, by producing negative pressure in the air cushion (4) of the container (1), liquid reducing agent (2) is sucked up from the storage container (9) using the pipette principle and the hydrostatic pressure as well as the cohesion forces, which prevail in the fluid column in the feed line (10), via the feed line (10), which firstly geodetically rises from the storage container (9), which reducing agent then automatically flows over from the storage container (9) into the container (1) until an adequately high excess pressure, which pushes said fluid column in the supply line (10) back into the storage container (9), is produced in the air cushion (4) of the container (1).

4. A motor vehicle according to any one of the preceding claims, **characterised in that** an independent conveying unit (6), which sucks up reducing agent (2) from the container (1), is provided to supply the reducing agent (2) to the exhaust gas system (7), and **in that** excess pressure in the air cushion (4) of the container (1) can only be produced by means of the air conveying device (11) by suitable activation thereof depending on at least one suitable boundary condition to such an extent that no vapour bubble formation can occur in the suction line (5) of the conveying unit (6).

5. A motor vehicle according to claim 4, **characterised in that** with the suitable activation of the air conveying device (11), a relevant temperature, preferably the temperature prevailing in the container (1) and/or a relevant pressure, preferably the ambient air pressure, is taken into account.

6. A motor vehicle according to any one of the preceding claims, **characterised in that** the air conveying device (11) is connected by a venting line (12) of the container (1) to the air cushion (4) present therein, a venting of the container (1) taking place through the air conveying device (11) that has been shut down.

7. A motor vehicle according to any one of the preceding claims, **characterised in that** the filling level of reducing agent (2) in the container (1) is inferred from the conveying output of the air conveying device (11) to produce a certain excess pressure in the container (1).

## Revendications

1. Véhicule comprenant un réservoir (1) accumulateur d'un agent réducteur liquide (2) pouvant être transféré dans l'installation des gaz d'échappement (7) du moteur du véhicule ainsi qu'un dispositif d'alimentation en air (11) au moyen duquel une surpression peut être établie ou en variante une dépression peut être produite par alimentation d'air additionnel provenant de l'environnement, dans le matelas d'air (4) qui se trouve au-dessus du niveau d'agent réducteur (3) dans le réservoir (1), caractérisé dans le réservoir (1) peut être introduit, par une conduite d'alimentation (10) provenant d'un autre réservoir accumulateur (9) d'agent réducteur (2) prévu dans le véhicule, de l'agent réducteur (2) provenant de ce réservoir accumulateur (9) au moyen d'une dépression produite dans le matelas d'air (4) par le dispositif d'alimentation en air (11).

2. Véhicule conforme à la revendication 1,
**caractérisé en ce qu'**
au moyen de la dépression régnant dans le matelas d'air (4) susmentionné de l'agent réducteur (2) peut être ramené par une conduite le conduisant vers l'installation de gaz d'échappement (7) dans le réservoir (1).

3. Procédé conforme à la revendication 2,
**caractérisé en ce qu'**
une quantité déterminée d'agent réducteur (2) provenant d'un réservoir accumulateur (9) situé plus haut d'un point de vue géodésique peut être introduite dans le réservoir (1) tout d'abord en produisant une dépression dans le matelas d'air (4) du réservoir (1) à partir du réservoir accumulateur (9) en utilisant le principe du siphon et la pression hydrostatique ainsi que les forces de cohésion qui règnent dans la colonne de fluide dans la conduite d'alimentation (10), en aspirant par la conduite d'alimentation (10) montant tout d'abord d'un point de vue géodésique à partir du réservoir accumulateur (9) de l'agent réducteur liquide (2) qui s'écoule ensuite automatiquement du réservoir accumulateur (9) dans le réservoir (1) tant que, dans le matelas d'air (4) du réservoir (1) est produite une surpression suffisamment élevée repoussant la colonne de fluide susmentionnée de la conduite d'alimentation (10) dans le réservoir accumulateur (9).

4. Véhicule conforme à l'une des revendications précédentes,
**caractérisé en ce que**
pour permettre l'introduction d'agent réducteur (2) dans l'installation des gaz d'échappement (7) il est prévu une unité de refoulement (6) autonome qui aspire l'agent réducteur (2) du réservoir (1), et, l'on ne peut produire au moyen du dispositif d'alimentation en air (11) et par une commande adaptée de ce dispositif, en fonction d'au moins une condition limite adaptée, dans le matelas d'air (4) du réservoir (1) qu'une surpression telle qu'aucune formation de bulles de vapeur ne puisse se produire dans la conduite d'aspiration (5) de l'unité de refoulement (6).

5. Véhicule conforme à la revendication 4,
**caractérisé en ce que**
lors de la commande adaptée du dispositif d'alimentation en air (11) on prend en considération une température pertinente, par exemple la température régnant dans le réservoir (1) et/ou une pression pertinente, par exemple la pression de l'air environnant.

6. Véhicule conforme à l'une quelconque des revendications précédentes,
**caractérisé en ce que**
le dispositif d'alimentation en air (11) est relié, par une conduite de ventilation (12) du réservoir (1) avec le matelas d'air (4) présent dans celuici, la ventilation du réservoir (1) s'effectuant au travers du dispositif d'alimentation en air (11) à l'arrêt.

7. Procédé conforme à l'une des revendications précédentes,
**caractérisé en ce qu'**
à partir du débit du dispositif d'alimentation en air (11) permettant d'obtenir une surpression déterminée dans ce réservoir (1) on conclut au niveau d'agent réducteur (2) dans le réservoir (1).
